# EUROPÄISCHE PATENTSCHRIFT

(11) **EP 0 571 576 B1**
(45) Veröffentlichungstag und Bekanntmachung des Hinweises auf die Patenterteilung: **04.03.1998**
(21) Anmeldenummer: 92924477.0
(22) Anmeldetag: 07.12.1992
(51) Int. Cl.: B01F 3/18, B01F 5/04, B01J 4/00

(54) **DOSIERVERFAHREN UND VORRICHTUNG ZU DESSEN DURCHFÜHRUNG**
METERING PROCESS AND DEVICE FOR IMPLEMENTING IT
PROCEDE ET DISPOSITIF DE DOSAGE

(30) Priorität: 09.12.1991 AT 2440/91
(43) Veröffentlichungstag der Anmeldung: 01.12.1993
(73) Patentinhaber: Erna Huemer Unistrap-Verpackung, A-1060 Wien (AT)
(72) Erfinder: STARLINGER-HUEMER, Franz, Xaver, A-1060 Wien (AT)
(74) Vertreter: Collin, Hans, Dipl.-Ing. Dr.
(86) Internationale Anmeldenummer: AT9200160
(87) Internationale Veröffentlichungsnummer: WO9311863

(56) Entgegenhaltungen:
- US-A- 4 358 207
- J. Hengstenberg et al: "Messen, Steuern und Regeln in der Chemischen Technik", 1981, Springer Verlag, Berlin, Band III, Seiten 269-270

## Beschreibung

Die vorliegende Erfindung betrifft ein Verfahren zur dosierten Zuführung von einem, gegebenenfalls mehreren festen, kleinteiligen rieselfähigen Zuschlagsmaterial bzw. -materialien mittels eines, gegebenenfalls mehrerer, insbesondere rohrförmigen(er) Zufuhrkanals(kanäle), zu einem festen, kleinteiligen, rieselfähigen durch einen, insbesondere rohrförmigen Hauptkanal od.dgl. bewegten Grundmaterial, wobei der, gegebenenfalls jeder Zufuhrkanal außerhalb des Hauptkanals od.dgl. mit Zuschlagsmaterial beaufschlagt wird, das Zuschlagsmaterial, gegebenenfalls die Zuschlagsmaterialien, durch den Zufuhrkanal bzw. die Zufuhrkanäle geleitet und schließlich durch die bzw. eine im Hauptkanal od.dgl. befindliche Austrittsöffnung des, gegebenenfalls jedes Zufuhrkanals in den Hauptkanal od.dgl. eingebracht wird bzw. werden, sowie eine Dosiervorrichtung zur Durchführung des Verfahrens.

Die Beimengung von festen, kleinteiligen, rieselfähigen Feststoffen zu ebenso festem, kleinteiligen, rieselfähigen Grundmaterial ist ein in der Technik weitverbreiteter Vorgang.

Es sind mehrere Varianten zur Dosierung von festen, kleinteiligen, rieselfähigen Stoffen bekannt, die im wesentlichen in zwei Gruppen eingeteilt werden können:

Bei der ersten Gruppe erfolgt die Dosierung mittels Zellenrädern, die an ihrem Umfang Bohrungen oder Ausnehmungen aufweisen und schrittweise gedreht werden, so daß bei jedem Drehschritt eine Kammer freigegeben wird. Dabei muß sowohl für das Grundmaterial als auch für alle zuzudosierenden Materialien jeweils eine Zellradvorrichtung vorgesehen werden. Die Steuerung dieser Vorrichtungen erfolgt über mechanische, elektrische oder elektronische Stellglieder. Für das Grundmaterial und für jede zuzumischende Komponente ist ein gesonderter Antrieb notwendig, der mit den anderen Antrieben mechanisch oder elektronisch gekoppelt werden muß.

Bei der zweiten Gruppe erfolgt die Dosierung mittels Schneckenförderer, wobei die Dosiermenge durch den Schneckendurchmesser und die Drehzahl bestimmt wird. Wie bei der ersten Gruppe ist auch bei den Dosiervorrichtungen der zweiten Gruppe sowohl für das Grundmaterial als auch für alle zuzudosierenden Materialien jeweils ein Schneckenförderer erforderlich. Die Steuerung dieser Vorrichtung erfolgt über mechanische, elektrische oder elektronische Stellglieder. Auch hier ist für das Grundmaterial und für jede zuzumischende Komponente ein gesonderter Antrieb erforderlich, der mit den anderen Antrieben mechanisch oder elektronisch gekoppelt sein muß.

Die bisher bekannten Dosiervorrichtungen sind verhältnismäßig kompliziert aufgebaut und dadurch besonders störanfällig. Diese Dosiervorrichtungen mit Antrieben für jede zuzumischende Komponente verursachen relativ häufig Betriebsunterbrechungen und damit Produktionsausfälle, wodurch die Produktivität einer Betriebsanlage beeinträchtigt wird.

Hier auf eine möglichst einfache Weise Abhilfe zu schaffen, ist ein Ziel der Erfindung. Diese Aufgabe wird durch das Verfahren bzw. die Vorrichtung gemäß Anspruch 1 bzw. Anspruch 15 gelöst.

Durch das erfindungsgemäße Verfahren ist auf ziemlich einfache Weise eine Dosiergenauigkeit von ±0,1 % in der Praxis zu erreichen, was in den meisten Anwendungsfällen in Industrie und Gewerbe ausreicht.

Die Dosierung gemäß vorliegender Erfindung erfolgt dadurch, daß durch einen Hauptkanal Grundmaterial bewegt wird und gleichzeitig Zuschlagsmaterial über einen Zufuhrkanal durch eine im Hauptkanal befindliche Austrittsöffnung dem Grundmaterial zugeführt wird.

Es ist dabei sehr wichtig, daß das Grundmaterial kontinuierlich über eine längere Wegstrecke gleichförmig bewegt wird, um einen möglichst gleichmäßigen Materialfluß mit laminarer Strömung zu erreichen, was bei ausreichend großen Rohrdurchmessern gewährleistet ist. Dabei gilt, daß die aus der sich in einem von Grundmaterial durchströmten Kanal befindliche Austrittsöffnung in den Kanal abgegebene Materialmenge bzw. der Materialdurchsatz durch diese Austrittsöffnung proportional zu der in der Bewegungsrichtung des Grundmaterials projizierten Fläche der Austrittsöffnung im Hauptkanal ist. Der Einfachheit halber wird für den Ausdruck "in der Bewegungsrichtung des Grundmaterials projizierte Fläche der Austrittsöffnung des Zufuhrkanals im Hauptkanal" die Bezeichnung "wirksamer Querschnitt des Zufuhrkanals im Hauptkanal" verwendet. Analog wird für den Ausdruck "freier Strömungsquerschnitt des Hauptkanals" die Bezeichnung "wirksamer Querschnitt des Hauptkanals" verwendet.

Bei der Durchführung der Erfindung wird das Verhältnis des wirksamen Querschnittes des Zufuhrkanals im Hauptkanal zum wirksamen Querschnitt des Hauptkanals im Bereich der Austrittsöffnung des, gegebenenfalls jedes Zufuhrkanals eingestellt, auch wenn in der Praxis meistens nur der wirksame Querschnitt des, gegebenenfalls jedes Zufuhrkanals im Hauptkanal oder der wirksame Querschnitt des Hauptkanals eingestellt wird.

Die Beimengung von verschiedenen festen Zusätzen zu festen, rieselfähigen Stoffen ist ein in der Technik sehr häufig angewendeter Vorgang, z.B. die Zudosierung von Feststoffen zu Sanden, Mehlen etc.

In der Praxis ist sehr oft erforderlich, daß ein variabler Prozentsatz an Zuschlagsstoff bzw. Zuschlagsstoffen einem Grundmaterial zugemischt wird. Das ist durch die vorliegende Erfindung auf äußerst einfache Weise durch Verwendung einfacher Hilfsmittel möglich. Vorzugsweise wird gemäß der Erfindung der wirksame Querschnitt des, gegebenenfalls jedes Zufuhrkanals im Hauptkanal od.dgl. durch Bewegen, insbesondere Drehen mindestens des im Hauptkanal od.dgl. befindlichen Endes bzw. eines in das Innere des Hauptkanals od.dgl. reichenden Abschnittes des, gegebenenfalls jedes Zufuhrkanals um seine Längsachse eingestellt, wobei der, gegebenenfalls jeder Zufuhrkanal eine Austrittsöffnung in einer schräg oder quer zur Längsachse des Zufuhrkanals stehenden Ebene aufweist. Die Längsachse des Zufuhrkanals ist dabei zweckmäßig schräg zur Längsachse des Hauptkanals angeordnet.

Vorteilhaft wird gemäß der Erfindung der wirksame Querschnitt des, gegebenenfalls jedes Zufuhrkanals im Hauptkanal od.dgl. durch teilweises Abdecken der Austrittsöffnung des, gegebenenfalls jedes Zufuhrkanals mit einem Abdeckteil eingestellt. Dies wird vor allem dann angewendet, wenn das im Hauptkanal befindliche Ende des Zufuhrkanals etwa in der Längsachse des Hauptkanals ausgerichtet ist und eine Austrittsöffnung mit einer quer zur Längsachse des Zufuhrkanals stehenden Ebene aufweist.

Wie bereits erwähnt, reicht es zur Einstellung des Verhältnisses des wirksamen Querschnittes des Zufuhrkanals im Hauptkanal zum wirksamen Querschnitt des Hauptkanals im Bereich der Austrittsöffnung des, gegebenenfalls jedes Zufuhrkanals aus, wenn nur der wirksame Querschnitt des Hauptkanals im Bereich der Austrittsöffnung bzw. -öffnungen eingestellt wird.

Vorteilhaft wird erfindungsgemäß der wirksame Querschnitt des Hauptkanals od.dgl. im Bereich, vorzugsweise nach der Austrittsöffnung des Zufuhrkanals, gegebenenfalls der Austrittsöffnungen der Zufuhrkanäle, bezogen auf die Bewegungsrichtung des Grundmaterials, mittels Blende, insbesondere Irisblende, eingestellt. Eine alternative einfache Methode dafür besteht darin, daß z.B. ein im Hauptkanal angeordneter Behälter aus Gummi mit Flüssigkeit befüllt wird, wodurch der freie Strömungsquerschnitt für das Material im Hauptkanal verkleinert wird, umgekehrt durch Ableiten von Flüssigkeit aus dem Behälter, der freie Strömungsquerschnitt im Hauptkanal vergrößert wird.

Es ist gemäß der Erfindung auch zweckmäßig, wenn der wirksame Querschnitt des Hauptkanals od.dgl. im Bereich, vorzugsweise nach der Austrittsöffnung des Zufuhrkanals, gegebenenfalls der Austrittsöffnungen der Zufuhrkanäle, bezogen auf die Bewegungsrichtung des Grundmaterials, durch Befüllen von mindestens einem im Inneren, insbesondere an der Innenwand des Hauptkanals od.dgl. angeordneten, vorzugsweise elastisch, verformbaren Behälter oder durch Ableiten von Medium aus diesem eingestellt wird.

Vorteilhaft weicht gemäß der Erfindung die Bewegungsrichtung des Zuschlagsmaterials im Zufuhrkanal, gegebenenfalls der Zuschlagsmaterialien in den Zufuhrkanälen im Hauptkanal od.dgl. von der Bewegungsrichtung des Grundmaterials im Hauptkanal od.dgl., vorzugsweise um etwa 45°, ab.

Bei Durchführung der Erfindung kann es auch vorteilhaft sein, wenn die Bewegungsrichtung des Zuschlagsmaterials im Zufuhrkanal mit der Bewegungsrichtung des Grundmaterials im Hauptkanal übereinstimmt.

Vorteilhaft wird gemäß der Erfindung, insbesondere bevor das Zuschlagsmaterial durch die Austrittsöffnung des Zufuhrkanals, gegebenenfalls die Zuschlagsmaterialien durch die Austrittsöffnungen der Zufuhrkanäle in den Hauptkanal od.dgl. eingebracht wird bzw. werden, die Austrittsöffnung des, gegebenenfalls jedes Zufuhrkanals durch Bewegen, insbesondere Drehen des, gegebenenfalls jedes Zufuhrkanals bzw. eines Abschnittes des, gegebenenfalls jedes Zufuhrkanals um seine Längsachse, wie erforderlich in Stellung gebracht und vorzugsweise wird diese Stellung fixiert.

Vorteilhaft werden bei Verwendung von mehreren Zufuhrkanälen die Austrittsöffnungen der Zufuhrkanäle mindestens annähernd auf gleiches Niveau, vorzugsweise gleichmäßig über den Querschnitt des Hauptkanals od.dgl. verteilt, in Stellung gebracht.

Zweckmäßig weist erfindungsgemäß der Hauptkanal od.dgl. einen Bereich mit Querschnittsflächen ungleicher Größe, insbesondere in der Bewegungsrichtung des Grundmaterials Querschnittsflächen zunehmender Größe, vorzugsweise mit konischem Axial- bzw. Längsschnitt mit in der Bewegungsrichtung des Grundmaterials sich erweiternden Wänden auf, wobei die Austrittsöffnung des Zufuhrkanals, gegebenenfalls die Austrittsöffnungen der Zufuhrkanäle in diesem Bereich des Hauptkanals od.dgl. in Stellung gebracht ist bzw. sind und die Stellung der Austrittsöffnung, gegebenenfalls der Austrittsöffnungen konstant gehalten wird, während mindestens der erwähnte Bereich des Hauptkanals od.dgl. vorzugsweise in seiner Längsachse, bewegt wird.

Vorteilhaft ist erfindungsgemäß am im Hauptkanal od.dgl. befindlichen Ende des Zufuhrkanals bzw. des in das Innere des Hauptkanals od.dgl. reichenden Abschnittes des, gegebenenfalls jedes Zufuhrkanals eine um diesen bewegbare Hülse mit quer oder schräg zur Längsachse des, gegebenenfalls des zugehörigen Zufuhrkanals ausgebildeter Austrittsöffnung angeordnet.

Durch die vorstehend angeführten erfindungsgemäßen Maßnahmen ist der wirksame Querschnitt des, gegebenenfalls jedes Zufuhrkanals im Hauptkanal einstellbar.

Dagegen kann der wirksame Querschnitt des Hauptkanals durch folgende nachstehend angeführte Maßnahmen gemäß der Erfindung verändert werden:

Zweckmäßig ist erfindungsgemäß im Inneren, insbesondere an der Innenwand des Hauptkanals od.dgl. im Bereich, vorzugsweise nach der Austrittsöffnung des Zufuhrkanals, gegebenenfalls der Austrittsöffnungen der Zufuhrkanäle, bezogen auf die Bewegungsrichtung des Grundmaterials, eine verstellbare Blende, insbesondere eine Irisblende, vorgesehen.

Gemäß einer anderen vorteilhaften Ausgestaltung der Erfindung ist im Inneren, insbesondere an der Innenwand des Hauptkanals od.dgl. im Bereich, vorzugsweise nach der Austrittsöffnung des Zufuhrkanals, gegebenenfalls der Austrittsöffnungen der Zufuhrkanäle, bezogen auf die Bewegungsrichtung des Grundmaterials, mindestens ein, vorzugsweise elastisch, verformbarer Behälter od.dgl. angeordnet, der mit mindestens einem Anschluß für die Zu- bzw. Ableitung von Medium, insbesondere Druckmedium, ausgestattet ist.

Schließlich sind noch folgende Ausgestaltungen gemäß der Erfindung zweckmäßig:

Vorteilhaft ist gemäß der Erfindung der Hauptkanal od.dgl. vertikal angeordnet und verläuft der Zufuhrkanal, gegebenenfalls verlaufen die Zufuhrkanäle zumindest teilweise schräg, vorzugsweise mit einem Winkel α von etwa 45°, hiezu. Es sei jedoch darauf hingewiesen, daß es auch sinnvoll sein kann, wenn der, gegebenenfalls jeder Zufuhrkanal parallel zum Hauptkanal ausgerichtet ist.

Gemäß einer besonders vorteilhaften Ausgestaltung der Erfindung weist der Hauptkanal od.dgl. einen Bereich mit Querschnittsflächen ungleicher Größe, insbesondere in der Bewegungsrichtung des Grundmaterials Querschnittsflächen zunehmender Größe, vorzugsweise mit konischem Axial- bzw. Längsschnitt mit in der Bewegungsrichtung des Grundmaterials sich erweiternden Wänden auf und ist die Austrittsöffnung des Zufuhrkanals, gegebenenfalls sind die Austrittsöffnungen der Zufuhrkanäle in diesen hinein- bzw. in diesem Bereich des Hauptkanals od.dgl. bewegbar.

Schließlich ist es auch gemäß vorliegender Erfindung vorteilhaft, wenn der Bereich des Hauptkanals od.dgl. mit Querschnittsflächen ungleicher Größe, vorzugsweise in seiner Längsachse, bewegbar ist.

Die Erfindung wird nachstehend an Hand der beiliegenden Zeichnungen beispielsweise erläutert:

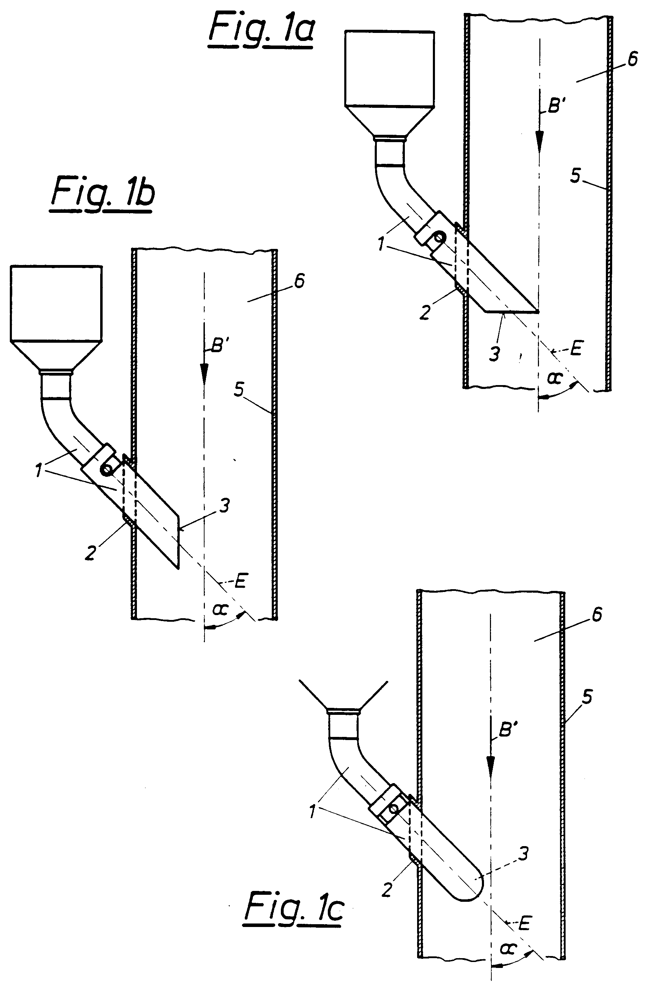

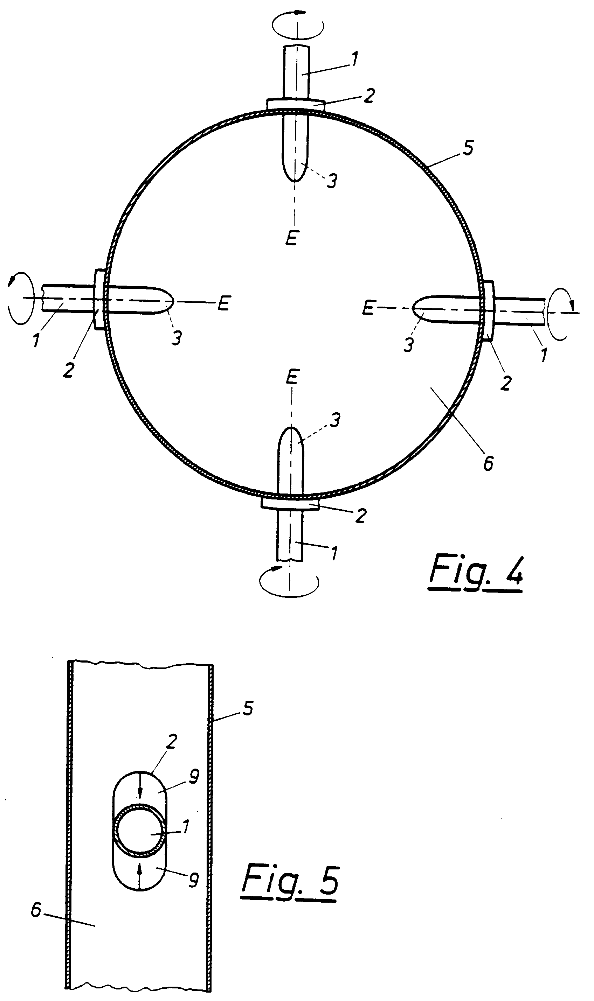

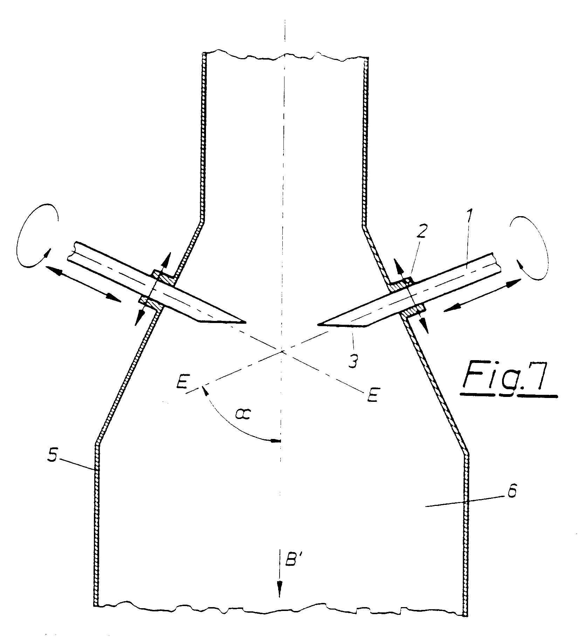

Die Fig. 1 bis 3, 6 und 7 zeigen einen vertikalen Schnitt der erfindungsgemäßen Dosiervorrichtung umfassend einen Zufuhrkanal (in Fig. 7 mit zwei Zufuhrkanälen) in Verbindung mit einem Hauptkanal, die Fig. 4 eine Draufsicht der erfindungsgemäßen Dosiervorrichtung mit vier im gleichen Abstand voneinander angeordneten Zufuhrkanälen in Verbindung mit einem Hauptkanal und die Fig. 5 eine Draufsicht auf die Wand des Hauptkanals im Bereich der Dosiervorrichtung.

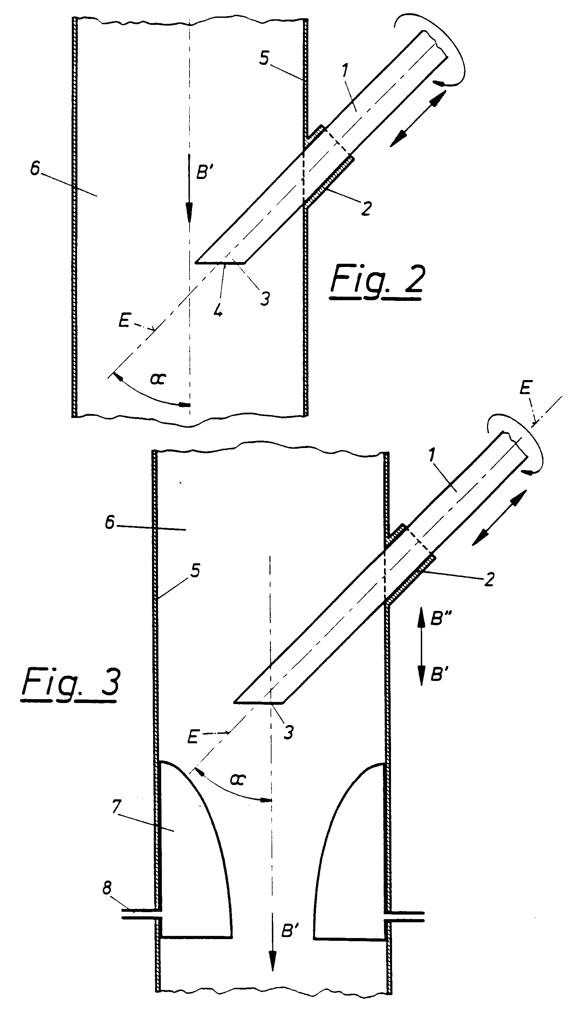

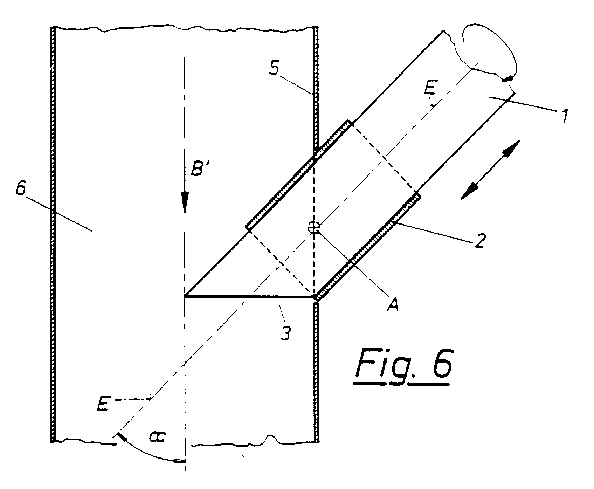

Es zeigen: Fig. 1a, 1b, 1c eine Dosiervorrichtung umfassend einen Zufuhrkanal mit einem außerhalb des Hauptkanals befindlichen Abschnitt, der mit einem in das Innere des Hauptkanals reichenden Abschnitt verbunden ist, samt Hauptkanal, Fig. 2 eine Dosiervorrichtung mit einem in einer Führung bewegbaren Zufuhrkanal samt Hauptkanal, Fig. 3 eine Dosiervorrichtung umfassend einen in einer Führung bewegbaren Zufuhrkanal, wobei der Hauptkanal im Bereich der Austrittsöffnung des Zufuhrkanals verformbare Behälter aufweist, Fig. 4 eine Draufsicht der Dosiervorrichtung umfassend vier im gleichen Abstand voneinander angeordnete Zufuhrkanäle im Hauptkanal, Fig. 5 eine speziell ausgebildete Führung insbesondere für einen Zufuhrkanal gemäß Fig. 3 und 4, sowie gemäß Fig. 7, Fig. 6 eine Dosiervorrichtung umfassend einen Zufuhrkanal mit einer in der Wand des Hauptkanals schwenkbaren Führung samt Hauptkanal, Fig. 7 eine Dosiervorrichtung mit zwei symmetrisch zueinander, jeweils in einer Führung bewegbaren Zufuhrkanälen in Verbindung mit sich konisch in der Bewegungsrichtung des Grundmaterials erweiternden Wänden des Hauptkanals.

In den Figuren ist mit 1 der Zufuhrkanal, mit 2 die Führung für den Zufuhrkanal, mit 3 die Austrittsöffnung am im Hauptkanal befindlichen Ende des Zufuhrkanals 1, mit 4 der Abdeckteil für die Austrittsöffnung 3 des Zufuhrkanals 1, mit 5 die Wand des Hauptkanals, mit 6 der Hauptkanal, mit E die Längsachse des Zufuhrkanals 1 und mit B' die Bewegungsrichtung des Grundmaterials bezeichnet.

In den Fig. 1a, 1b, 1c wird das Zuschlagsmaterial über einen Zufuhrkanal 1 durch eine Austrittsöffnung 3 einem in der Bewegungsrichtung B' im Hauptkanal 6 bewegten Grundmaterial zugeführt. Der Zufuhrkanal 1 besteht aus einem außerhalb des Hauptkanals 6 angeordneten Abschnitt, der mit einem in das Innere des Hauptkanals 6 reichenden Abschnitt verbunden ist. Dieser in den Hauptkanal 6 reichende Abschnitt weist an seinem Ende eine Austrittsöffnung 3 in einer schräg zur Längsachse E des Zufuhrkanals 1 stehenden Ebene auf und ist als Überschubrohr ausgebildet.

Durch Drehen des Überschubrohres um die Längsachse E des Zufuhrkanals 1 ist eine gewünschte Stellung der Austrittsöffnung 3 einstellbar, und ist somit auch eine gewünschte Dosiermenge/Durchsatzmenge an Zuschlagsmaterial bzw. der gewünschte wirksame Querschnitt des Zufuhrkanals 1 im Hauptkanal 6 bzw. das gewünschte Verhältnis des wirksamen Querschnittes des Zufuhrkanals 1 im Hauptkanal 6 zum wirksamen Querschnitt des Hauptkanals 6 im Bereich der Austrittsöffnung 3 einstellbar. Vorteilhaft schließt dabei die Längsachse E mindestens des im Hauptkanal 6 befindlichen Abschnittes des Zufuhrkanals 1 mit der Bewegungsrichtung B' des Grundmaterials im Hauptkanal 6 einen Winkel α von etwa 45° ein.

In Fig. 1a ist das Überschubrohr so in Stellung gebracht, daß die in Bewegungsrichtung des Grundmaterials projizierte Fläche der Austrittsöffnung 3 am Zufuhrkanal 1 die maximale Größe aufweist. Diese Ausrichtung des Überschubrohres ermöglicht die maximale Zuführung an Zuschlagsmaterial.

Durch die in Fig. 1b dargestellte Ausrichtung des Überschubrohres weist die in Bewegungsrichtung des Grundmaterials projizierte Fläche der Austrittsöffnung 3 des Zufuhrkanals 1 die minimale Größe auf. Durch diese Stellung des Überschubrohres gelangt keine bzw. nur eine in den meisten Fällen vernachlässigbare Menge an Zuschlagsmaterial in den Hauptkanal 6.

Schließlich ist in Fig. 1c das Überschubrohr in eine Stellung gebracht, die eine im Vergleich zu Fig. 1a und 1b mittlere Größe in bezug auf die in Bewegungsrichtung des Grundmaterials projizierte Fläche der Austrittsöffnung 3 aufweist. Dadurch ist eine Dosierleistung zwischen maximaler und minimaler Dosierleistung gegeben. Selbstverständlich ist jede gewünschte Dosierleistung zwischen Maximal- und Minimalleistung - stufenlos - einstellbar.

Auch in Fig. 2 weist der Zufuhrkanal 1 an seinem im Hauptkanal 6 befindlichen Ende eine Austrittsöffnung 3 in einer schräg zur Längsachse E des Zufuhrkanals 1 stehenden Ebene auf. Vorzugsweise schließt auch hier die Längsachse E des Zufuhrkanals 1 mit der Bewegungsrichtung B' des Grundmaterials im Hauptkanal 6 einen Winkel α von etwa 45° ein. Der Zufuhrkanal 1 ist in der Führung 2 um seine Längsachse E drehbar, wodurch die in Bewegungsrichtung B' des Grundmaterials projizierte Fläche der Austrittsöffnung 3 und damit der wirksame Querschnitt des Zufuhrkanals 1 im Hauptkanal 6 einstellbar ist. Zusätzlich ist der Zufuhrkanal 1 in der Fuhrung 2 in seiner Längsachse E hin- und herbewegbar, wodurch die Austrittsöffnung 3 je nach Wunsch vom Zentrum des Hauptkanals 6 bis nahe der Innenwand des Hauptkanals 6 in Stellung gebracht werden kann.

In Fig. 3 ist - wie in Fig. 2 - der Zufuhrkanal 1 in einer Führung 2 um die Längsachse E drehbar, in seiner Längsachse E hin- und herbewegbar und weist an seinem im Hauptkanal 6 befindlichen Ende eine Austrittsöffnung 3 in einer schräg zu seiner Längsachse E stehenden Ebene auf. Vorzugsweise schließt auch hier die Längsachse E des Zufuhrkanals 1 mit der Bewegungsrichtung B' des Grundmaterials im Hauptkanal 6 einen Winkel α von 45° ein. Zusätzlich zu Fig. 2 weist der Hauptkanal 6 im Bereich nach der Austrittsöffnung 3 einen elastisch verformbaren Behälter 7 auf, der mit einem Medium, z.B. Druckluft, über den Anschluß 8 befüllt werden kann bzw. aus dem über Anschluß 8 Medium abgeleitet werden kann. Vorzugsweise ist der Zufuhrkanal 1 in einer speziell ausgebildeten Führung 2 - wie z.B. in Fig. 5 dargestellt - parallel zur Wand 5 des Hauptkanals 6, d.h. in Richtung B' bzw. B'', bewegbar, so daß die Austrittsöffnung 3 des Zufuhrkanals 1 an jede gewünschte Stelle im Bereich des Hauptkanals 6 mit Querschnittsflächen ungleicher Größe positionierbar ist. Mit der in Fig. 3 dargestellten Dosiervorrichtung kann sowohl der wirksame Querschnitt des Zufuhrkanals 1 im Hauptkanal 6 als auch der wirksame Querschnitt des Hauptkanals 6 im Bereich der Austrittsöffnung 3 je nach Bedarf eingestellt werden.

In Fig. 4 ist die Zuführung von Zuschlagsmaterial bzw. -materialien über vier im gleichen Abstand voneinander angeordnete, zueinander symmetrisch ausgerichtete, jeweils in der Wand 5 des Hauptkanals 6 befindliche Zufuhrkanäle 1 dargestellt. Die Zufuhrkanäle 1 weisen jeweils am im Hauptkanal 6 befindlichen Ende eine Austrittsöffnung 3, vorteilhaft in einer schräg zur Längsachse E des Zufuhrkanals 1 stehenden Ebene, auf. Jeder Zufuhrkanal 1 ist in der zugehörigen Führung 2 um seine Längsachse E drehbar, wodurch die in Bewegungsrichtung B' des Grundmaterials projizierten Flächen der Austrittsöffnungen 3 und damit der wirksame Querschnitt jedes Zufuhrkanals 1 im Hauptkanal 6 einstellbar sind bzw. ist. Zusätzlich ist jeder Zufuhrkanal 1 in der zugehörigen Führung 2 in seiner Längsachse E hin- und herbewegbar, wodurch die Austrittsöffnungen 3, falls erforderlich, vom Bereich nahe der Innenwand des Hauptkanals 6 ins Zentrum des Hauptkanals 6 bewegbar sind. Vorzugsweise (nicht dargestellt) schließt die Längsachse E jedes Zufuhrkanals 1 mit der Bewegungsrichtung B' des Grundmaterials im Hauptkanal 6 einen Winkel α von 45° ein. Es kann auch vorteilhaft sein (nicht dargestellt), wenn im Bereich nach den Austrittsöffnungen 3 der Zufuhrkanäle 1, bezogen auf die Bewegungsrichtung B' des Grundmaterials im Hauptkanal 6 der Hauptkanal 6 einen Bereich mit Querschnittsflächen ungleicher Größe aufweist und jeder Zufuhrkanal 1 in einer speziell ausgebildeten Führung 2 - z.B. wie in Fig. 5 dargestellt - auch parallel zur Wand 5 des Hauptkanals 6 bewegt werden kann.

Fig. 5 zeigt eine speziell ausgebildete Führung 2 für eine Dosiervorrichtung. Der rohrförmige Zufuhrkanal 1 ist in einer ovalen, vertikal angeordneten Führung 2 verstellbar und an dieser fixierbar, wobei zwei vertikal verstellbare, dem Querschnitt des Zufuhrkanals 1 angepaßte Dichtelemente 9 ein Austreten von Material aus dem Hauptkanal 6 verhindern.

In Fig. 6 wird das Zuschlagsmaterial über einen Zufuhrkanal 1 eingebracht, der an seinem im Hauptkanal 6 befindlichen Ende eine Austrittsöffnung 3 in einer schräg zur Längsachse E des Zufuhrkanals 1 stehenden Ebene aufweist. Der Zufuhrkanal 1 ist mittels einer in der Wand 5 des Hauptkanals 6 um die Achse A drehbar gelagerten Führung 2 schwenkbar.

Die in die Bewegungsrichtung B' des Grundmaterials projizierte Fläche der Austrittsöffnung 3 und damit der wirksame Querschnitt des Zufuhrkanals 1 im Hauptkanal 6 kann durch Schwenken des Zufuhrkanals 1 mittels Führung 2 (wobei der gewünschte Winkel α, den die Längsachse E des Zufuhrkanals 1 und die Bewegungsrichtung B' des Grundmaterials einschließen, eingestellt wird), aber auch durch Drehen des Zufuhrkanals 1 um seine Längsachse E eingestellt werden. Durch Bewegen des Zufuhrkanals 1 in der Längsachse kann die Austrittsöffnung 3 des Zufuhrkanals 1 vom Bereich nahe der Innenwand des Hauptkanals 6 bis ins Zentrum des Hauptkanals 6 in Stellung gebracht werden.

In Fig. 7 ist eine Variante der Erfindung dargestellt, in der die Dosiervorrichtung zwei Zufuhrkanäle aufweist. Durch Verwendung von zwei Zufuhrkanälen wird die Dosierleistung für Zuschlagsmaterial vergrößert bzw. können gleichzeitig zwei verschiedene Zuschlagsmaterialien dem Grundmaterial zugeführt werden.

Beide Zufuhrkanäle 1 münden in den Bereich des Hauptkanals 6 mit sich konisch in der Bewegungsrichtung B' des Grundmaterials erweiternden Wänden. Den Zufuhrkanälen 1 ist an der Wand 5 des Hauptkanals 6 jeweils eine Führung 2 zugeordnet, die zueinander symmetrisch angeordnet sind, wodurch auch die Zufuhrkanäle 1 zueinander symmetrisch ausrichtbar sind. Das Zuschlagsmaterial bzw. die Zuschlagsmaterialien wird bzw. werden über die Zufuhrkanäle 1 in das Innere des Hauptkanals 6 im Bereich mit Querschnittflächen ungleicher Größe eingebracht, wobei jeder Zufuhrkanal 1 an seinem im Hauptkanal 6 befindlichen Ende jeweils eine Austrittsöffnung 3 in einer schräg zur Längsachse E des Zufuhrkanals 1 stehenden Ebene aufweist. Die Längsachsen E der beiden Zufuhrkanäle 1 schließen mit der Bewegungsrichtung B' des Grundmaterials im Hauptkanal 6 jeweils einen Winkel α von 45° ein. Die beiden Zufuhrkanäle 1 sind in der zugehörigen Führung 2 bewegbar. Durch Drehen der Zufuhrkanäle 1 jeweils um ihre Längsachse E sind die in Bewegungsrichtung B' des Grundmaterials projizierten Flächen der Austrittsöffnungen 3 und damit die wirksamen Querschnitte der beiden Zufuhrkanäle 1 im Hauptkanal 6 einstellbar. Weiters sind die Zufuhrkanäle 1 jeweils in der Längsachse E hin- und herbewegbar. Schließlich sind die beiden Zufuhrkanäle durch Verwendung speziell ausgebildeter Führungen 2 - z.B. wie in Fig. 5 dargestellt - jeweils parallel zur zugehörigen Wand 5 des Hauptkanals 6 bewegbar. Die Austrittsöffnungen 3 der beiden Zufuhrkanäle 1 können auf jede gewünschte Position im Hauptkanal 6 im Bereich mit sich konisch in der Bewegungsrichtung B' des Grundmaterials erweiternden Wänden gebracht werden.

Mit der in Fig. 7 dargestellten Ausgestaltung der Erfindung sind zwei verschiedene oder gleiche Zuschlagsmaterialien dem Grundmaterial zudosierbar, wobei durch Bewegen bzw. Ausrichten beider Zufuhrkanäle 1 der wirksame Querschnitt jedes Zufuhrkanals 1 im Hauptkanal 6 und gleichzeitig damit auch der wirksame Querschnitt des Hauptkanals 6 im Bereich der Austrittsöffnungen 3 eingestellt werden.

In den in den Figuren dargestellten Ausgestaltungen der Erfindung ist die jeweils gewünschte Ausrichtung des Zufuhrkanals 1 bzw. der Austrittsöffnung 3 mittels Führung 2 an der Wand 5 des Hauptkanals 6 fixierbar, jedoch aus Gründen der Übersichtlichkeit nicht gesondert dargestellt.

## Patentansprüche

1. Verfahren zur dosierten Zuführung mindestens eines festen, kleinteiligen, rieselfähigen Zuschlagsmaterials mittels wenigstens eines Zufuhrkanals zu einem festen, kleinteiligen, rieselfähigen durch einen Hauptkanal bewegten Grundmaterial, wobei der wenigstens eine Zufuhrkanal außerhalb des Hauptkanals mit dem Zuschlagsmaterial beaufschlagt wird, das Zuschlagsmaterial durch den Zufuhrkanal geleitet und schließlich durch eine im Hauptkanal befindliche Austrittsöffnung des Zufuhrkanals in den Hauptkanal eingebracht wird, dadurch gekennzeichnet, daß, bevor das Zuschlagsmaterial in den Hauptkanal eingebracht wird, durch Bewegen, vorzugsweise Drehen, eines die Austrittsöffnung fixer Größe und fixer Form aufweisenden Teils des mindestens einen Zufuhrkanals, wobei die Austrittsöffnung einen Winkel mit einer Normalebene auf die Längsachse dieses Teils des Zufuhrkanals einschließt, das Verhältnis der in der Bewegungsrichtung des Grundmaterials projizierten Fläche der wenigstens einen Austrittsöffnung des im Hauptkanal befindlichen Teils des wenigstens einen Zufuhrkanals zum Strömungsquerschnitt des Hauptkanals im Bereich der wenigstens einen Austrittsöffnung des im Hauptkanal befindlichen Teils des wenigstens einen Zufuhrkanals eingestellt wird.

2. Verfahren nach Anspruch 1, dadurch gekennzeichnet, daß zusätzlich zur Bewegung des im Hauptkanal befindlichen Zufuhrkanalteils bzw. dessen dort befindlichen Austrittsöffnung der Querschnitt des Hauptkanals und bzw. oder des wenigstens einen Zufuhrkanals im Bereich der Austrittsöffnung des Zufuhrkanals eingestellt wird.

3. Verfahren nach Anspruch 1 oder 2, dadurch gekennzeichnet, daß der in den Hauptkanal reichende Teil des mindestens einen Zufuhrkanals als Überschubrohr ausgebildet ist und durch Drehen des Überschubrohres um seine Achse das genannte Verhältnis eingestellt wird.

4. Verfahren nach Anspruch 3, dadurch gekennzeichnet, daß das Überschubrohr in Richtung der Achse des Zufuhrkanals bewegt wird, um die Austrittsöffnung in Stellung zu bringen.

5. Verfahren nach Anspruch 4, dadurch gekennzeichnet, daß die jeweils ausgewählte Stellung fixiert wird.

6. Verfahren nach Anspruch 1 oder 2, dadurch gekennzeichnet, daß der mindestens eine Zufuhrkanal mittels einer in der Wand des Hauptkanals drehbar gelagerten Führung durch Schwenken um eine mindestens im wesentlichen normal in bezug auf die Achse des Hauptkanals in der Wand des Hauptkanals angeordneten Achse im Hauptkanal positioniert und in dieser Position fixiert wird.

7. Verfahren nach einem der Ansprüche 1 bis 6, dadurch gekennzeichnet, daß die Bewegungsrichtung des Zuschlagsmaterials im Zufuhrkanal, z.B. Überschubrohr, von der Bewegungsrichtung des Grundmaterials im Hauptkanal, vorzugsweise um etwa 45°, abweicht.

8. Verfahren nach einem der Ansprüche 1 bis 7, dadurch gekennzeichnet, daß die Austrittsöffnung(en) des bzw. der Zufuhrkanals/kanäle im Zentrum des Hauptkanals positioniert wird bzw. werden.

9. Verfahren nach einem der Ansprüche 1 bis 7, dadurch gekennzeichnet, daß die Austrittsöffnung(en) des bzw. der Zufuhrkanals/kanäle in den Bereich nahe der Innenwand des Hauptkanals positioniert wird bzw. werden.

10. Verfahren nach einem der Ansprüche 1 bis 9, dadurch gekennzeichnet, daß bei Verwendung von mehreren Zufuhrkanälen die Austrittsöffnungen der Zufuhrkanäle im Hauptkanal mindestens annähernd auf gleichem Niveau, vorzugsweise gleichmäßig über den Querschnitt des Hauptkanals verteilt, positioniert werden.

11. Verfahren nach einem der Ansprüche 1 bis 10, dadurch gekennzeichnet, daß das bzw. jedes in den Hauptkanal reichende Zufuhrkanalende in einem Hauptkanal bewegt wird, dessen Querschnitt im Bereich, vorzugsweise nach der Austrittsöffnung des bzw. jedes Zufuhrkanals, z.B. des Überschubrohres, bezogen auf die Bewegungsrichtung des Grundmaterials, durch Befüllen von mindestens einem im Inneren des Hauptkanals angeordneten verformbaren Behälter oder durch Ableiten von Medium aus diesem eingestellt wird.

12. Verfahren nach Anspruch 11 , dadurch gekennzeichnet, daß der Behälter an der Innenwand des Hauptkanals angeordnet ist und vorzugsweise elastisch verformbar ist.

13. Verfahren nach einem der Ansprüche 1 bis 12, dadurch gekennzeichnet, daß das bzw. jedes in den Hauptkanal reichende Zufuhrkanalende in einem Bereich des Hauptkanals mit Querschnittsflächen ungleicher Größe, insbesondere mit in der Bewegungsrichtung des Grundmaterials zunehmender Größe, bewegt wird.

14. Verfahren nach Anspruch 13, dadurch gekennzeichnet, daß das bzw. jedes in den Hauptkanal reichende Zufuhrkanalende in einem Bereich des Hauptkanals mit konischem Axial- bzw. Längsschnitt bewegt wird.

15. Dosiervorrichtung mit einem Hauptkanal (6) und mindestens einem Zufuhrkanal (1), wobei das Innere des wenigstens einen Zufuhrkanals (1) mit dem Inneren des Hauptkanals (6) verbunden ist, insbesondere zur Durchführung des Verfahrens nach einem der Ansprüche 1 bis 14, dadurch gekennzeichnet, daß der mindestens eine Zufuhrkanal (1) aus zwei Teilen besteht, wobei ein Teil des Zufuhrkanals außerhalb des Hauptkanals (6) angeordnet und mit einem in das Innere des Hauptkanals (6) reichenden Teil des Zufuhrkanals (1) verbunden ist, wobei letzterer Teil eine Austrittsöffnung (3) aufweist, die einen Winkel mit einer Normalebene auf die Längsachse dieses in das Innere des Hauptkanals reichenden Teils des Zufuhrkanals einschließt, wobei der Zufuhrkanal (1), zumindest jedoch sein in das Innere des Hauptkanals reichender Teil, bewegbar, insbesondere um die Längsachse (E) des Zufuhrkanals drehbar ist, wodurch das Verhältnis der in der Bewegungsrichtung des Grundmaterials projizierten Fläche der Austrittsöffnung des im Hauptkanal befindlichen Teils des wenigstens einen Zufuhrkanals zum Strömungsquerschnitt des Hauptkanals im Bereich der Austrittsöffnung einstellbar ist.

16. Dosiervorrichtung nach Anspruch 15, dadurch gekennzeichnet, daß der in das Innere des Hauptkanals (6) reichende Teil des mindestens einen Zufuhrkanals (1) als Überschubrohr ausgebildet ist.

17. Dosiervorrichtung nach Anspruch 16, dadurch gekennzeichnet, daß das Überschubrohr in der Achse (E) des (jeweiligen) Zufuhrkanals (1) bewegbar ist.

18. Dosiervorrichtung nach einem der Ansprüche 15 bis 17, dadurch gekennzeichnet, daß der bzw. jeder Zufuhrkanal (1) zumindest teilsweise schräg, vorzugsweise mit einem Winkel (α) von etwa 45°, zum, bevorzugt vertikal angeordneten, Hauptkanal (6) verläuft.

19. Dosiervorrichtung nach einem der Ansprüche 15 bis 18, dadurch gekennzeichnet, daß im Bereich des bzw. jedes in den Hauptkanal (6) reichenden Zufuhrkanalendes, vorzugsweise nach der (den) Austrittsöffnung(en) (3), bezogen auf die Bewegungsrichtung (B') des Grundmaterials, im Inneren, insbesondere an der Innenwand des Hauptkanals (6), mindestens ein, vorzugsweise elastisch, verformbarer Behälter (7) angeordnet ist, der mit mindestens einem Anschluß (8) für die Zu- bzw. Ableitung von Medium, insbesondere Druckmedium, ausgestattet ist.

20. Dosiervorrichtung nach einem der Ansprüche 15 bis 19, dadurch gekennzeichnet, daß die Führung (2) um eine mindestens im wesentlichen normal zu der von den Achsen von Hauptkanal (6) und Zufuhrkanal (1) gebildeten Ebene angeordnete Achse (A) schwenkbar ist.

21. Dosiervorrichtung nach einem der Ansprüche 15 bis 20, dadurch gekennzeichnet, daß der Hauptkanal (6) einen Bereich mit Querschnittsflächen ungleicher Größe, insbesondere in der Bewegungsrichtung (B') des Grundmaterials Querschnittsflächen zunehmender Größe, vorzugsweise mit konischem Axial- bzw. Längsschnitt mit in der Bewegungsrichtung (B') des Grundmaterials sich erweiternden Wänden aufweist und die bzw. jede Austrittsöffnung (3) in diesen hinein bzw. in diesem Bereich des Hauptkanals (6) bewegbar ist

22. Dosiervorrichtung nach einem der Ansprüche 15 bis 21 , dadurch gekennzeichnet, daß die zugehörigen Führungen (2) mehrerer Zufuhrkanäle (1) gleichmäßig über den Querschnitt des Hauptkanals (6) verteilt angeordnet sind.

## Claims

1. A process for metered feeding of at least one solid, small-particle, pourable aggregate material by means of at least one feeding channel to a solid, small-particle, pourable basic material moved through a main channel, the at least one feeding channel being charged with the aggregate material outside the main channel, the aggregate material being guided through the feeding channel and finally being introduced into the main channel through an outlet opening of the feeding channel located inside the main channel, characterized in that, before introducing the aggregate material into the main channel, the ratio between the area of the at least one outlet opening of that part of the at least one feeding channel located in the main channel, projected in the direction of movement of the basic material, and the effective cross-section of the main channel in the region of the at least one outlet opening of that portion of the at least one feeding channel located in the main channel is adjusted by moving, preferably rotating a portion of the at least one feeding channel having the outlet opening of fixed size and fixed shape, the outlet opening forming an angle with a plane normal to the longitudinal axis of this part of the feeding channel.

2. A process according to claim 1, characterized in that, in addition to the movement of that part of the feeding channel located in the main channel and its outlet opening located there, respectively, the cross-section of the main channel and/or of the at least one feeding channel is adjusted in the region of the outlet opening of the feeding channel.

3. A process according to claim 1 or claim 2, characterized in that that part of the at least one feeding channel reaching into the main channel takes the form of a sleeve tube and in that said ratio is adjusted by rotating the sleeve tube around its axis.

4. A process according to claim 3, characterized in that the sleeve tube is moved in the direction of the axis of the feeding channel in order to position the outlet opening.

5. A process according to claim 4, characterized in that the respective position chosen is fixed.

6. A process according to claim 1 or claim 2, characterized in that the at least one feeding channel is positioned in the main channel by pivoting it around an axis arranged in the wall of the main channel and being at least substantially normal with respect to the axis of the main channel by means of a rotatably journal led guide means, and is fixed in this position.

7. A process according to any of claims 1 to 6, characterized in that the direction of movement of the aggregate material in the feeding channel, for instance sleeve tube, deviates, preferably by about 45°, from the direction of movement of the basic material in the main channel.

8. A process according to any of claims 1 to 7, characterized in that the outlet opening(s) of the feeding channel(s) is/are positioned in the center of the main channel.

9. A process according to any of claims 1 to 7, characterized in that the outlet opening(s) of the main channel(s) is/are positioned in the region near the interior wall of the main channel.

10. A process according to any of claims 1 to 9, characterized in that, when using several feeding channels, the outlet openings of the feeding channels in the main channel are positioned at least approximately at the same level, preferably equally distributed across the cross-section of the main channel.

11. A process according to any of claims 1 to 10, characterized in that the or each feeding channel end reaching into the main channel is moved in a main channel, the cross-section of which is adjusted by filling at least one deformable container arranged inside the main channel or by discharging medium therefrom, the deformable container being preferably arranged in the region downstream of the outlet opening of the or each feeding channel, for instance the sleeve tube, with respect to the direction of movement of the basic material.

12. A process according to claim 11, characterized in that the container is arranged at the interior wall of the main channel and is preferably elastically deformable.

13. A process according to any of claims 1 to 12, characterized in that the or each feeding channel end reaching into the main channel is moved in a region of the main channel having cross-sectional areas of different sizes, in particular cross-sectional areas increasing in the direction of movement of the basic material.

14. A process according to claim 13, characterized in that the or each feeding channel end reaching into the main channel is moved in a region of the main channel having a conical axial or longitudinal section.

15. A metering device having a main channel (6) and at least one feeding channel (1), the interior of the at least one feeding channel (1) communicating with the interior of the main channel (6), in particular for carrying out the process according to any of claims 1 to 14, characterized in that the at least one feeding channel (1) consists of two parts, one part of the feeding channel being arranged outside the main channel (6) and communicating with a part of the feeding channel (1) reaching inside the main channel (6), the latter part being provided with an outlet opening (3) forming an angle with a plane normal to the longitudinal axis of this part of the feeding channel reaching inside the main channel, the feeding channel (1), or at least its part reaching inside the main channel, being moveable, in particular rotatable around the longitudinal axis (E) of the feeding channel, thus making it possible to adjust the ratio between the area of the outlet opening of that part of the at least one feeding channel located in the main channel, projected in the direction of movement of the basic material, and the effective cross-section of the main channel in the region of the outlet opening.

16. A metering device according to claim 15, characterized in that that part of the at least one feeding channel (1) reaching inside the main channel (6) takes the form of a sleeve tube.

17. A metering device according to claim 16, characterized in that the sleeve tube is movable in the axis (E) of the (respective) feeding channel (1).

18. A metering device according to any of claims 15 to 17, characterized in that the or each feeding channel (1) is at least partly slanted, preferably at an angle (α) of some 45°, to the main channel (6) which is preferably arranged vertically.

19. A metering device according to any of claims 15 to 18, characterized in that at least one, preferably elastically, deformable container (7), provided with a port (8) for supplying and/or letting off medium, in particular pressurized medium, is arranged in the region of the or each feeding channel end reaching into the main channel (6), preferably downstream of the outlet opening(s) (3), with respect to the direction of movement (B') of the basic material, inside, in particular at the interior wall of the main channel (6).

20. A metering device according to any of claims 15 to 19, characterized in that the guide (2) is pivotable about an axis (A) substantially normal to the plane formed by the axes of main channel (6) and feeding channel (1).

21. A metering device according to any of claims 15 to 20, characterized in that the main channel (6) has a region having cross-sectional areas of different sizes, in particular cross-sectional areas increasing in the direction of movement (B') of the basic material, preferably having conical axial or longitudinal section with walls widening in the direction of movement (B') of the basic material and the or each outlet opening (3) being moveable thereinto or within this region of the main channel.

22. A metering device according to any of claims 15 to 21, characterized in that the associated guides (2) of several feeding channels (1) are equally spaced across the cross-section of the main channel (6).

## Revendications

1. Un processus pour l'alimentation dosée d'au moins une matière agrégat solide en petits fragments et coulante au moyen d'au moins un canal d'alimentation à une matière de base solide en petits fragments et coulante, transportée en passant par un canal principal, l'au moins un canal d'alimentation étant chargé de la matière agrégat à l'extérieur du canal principal, la matière agrégat étant transportée en passant par le canal d'alimentation et finalement étant introduite dans le canal principal en passant par un orifice de sortie du canal d'alimentation situé dans le canal principal, caractérisé en ce que, avant l'introduction de la matière agrégat dans le canal principal, le rapport entre la surface, projetée dans la direction de mouvement de la matière de base, de l'au moins un orifice de sortie de celle partie de l'au moins un canal d'alimentation qui est située dans le canal principial et la section de passage du canal principal dans la zone de l'au moins un orifice de sortie de la partie située dans le canal principal de l'au moins un canal d'alimentation est réglé par le mouvement, préférablement la rotation, d'une partie de l'au moins un canal d'alimentation ayant l'orifice de sortie d'une taille fixe et d'une forme fixe, l'orifice de sortie formant un angle avec un plan normal à l'axe longitudinal de celle partie du canal d'alimentation.

2. Le processus selon la revendication 1, caractérisé en ce qu'additionnellement au mouvement de la partie du canal d'alimentation située dans le canal principal ou bien son orifice de sortie y situé, la section transversale du canal principal et/ou de l'au moins un canal d'alimentation est ajustée dans la zone de l'orifice de sortie du canal d'alimentation.

3. Le processus selon la revendication 1 ou 2, caractérisé en ce que la partie de l'au moins un canal d'alimentation s'étendant dans le canal principal prend la forme d'un manchon et en ce que le rapport mentionné est ajusté en tournant le manchon autour de son axe.

4. Le processus selon la revendication 3, caractérisé en ce que le manchon est déplacé dans la direction de l'axe du canal d'alimentation pour positionner l'orifice de sortie.

5. Le processus selon la revendication 4, caractérisé en ce que la position choisie est fixée.

6. Le processus selon la revendication 1 ou 2, caractérisé en ce que l'au moins un canal d'alimentation est positionné dans le canal principal au moyen d'un guide rotatif dans le mur du canal principal en le pivotant autour d'un axe orienté de façon essentiellement normale à l'axe du canal principal et est fixé dans cette position.

7. Le processus selon l'une des revendications 1 à 6, caractérisé en ce que la direction de mouvement de la matière agrégat dans le canal d'alimentation, par exemple le manchon, s'écarte de la direction de mouvement de la matière de base dans le canal principal, préférablement d'environ 45°.

8. Le processus selon l'une des revendications 1 à 7, caractérisé en ce que l'orifice/les orifices de sortie du canal ou bien des canaux d'alimentation est/sont positionné(s) dans le centre du canal principal.

9. Le processus selon l'une des revendications 1 à 7, caractérisé en ce que l'orifice/les orifices de sortie du canal ou bien des canaux d'alimentation est/sont positionné(s) dans la zone près du mur intérieur du canal principal.

10. Le processus selon l'une des revendications 1 à 9, caractérisé en ce que, en cas de l'utilisation de plusieurs canaux d'alimentation, les orifices de sortie des canaux d'alimentation sont positionés au moins approximativement au même niveau dans le canal principal, préférablement distribués régulièrement à travers la section transversale du canal principal.

11. Le processus selon l'une des revendications 1 à 10, caractérisé en ce que la ou bien chaque extrémité du canal d'alimentation s'étendant dans le canal principal est déplacée dans un canal principal dont la section transversale est ajustée dans la zone préférablement en aval de l'orifice de sortie du ou bien de chaque canal d'alimentation, par exemple du manchon, par rapport à la direction de mouvement de la matière de base, en remplissant au moins un récipient déformable situé à l'intérieur du canal principal, ou en détournant de la matière de celui-ci.

12. Le processus selon la revendication 11, caractérisé en ce que le récipient est arrangé au mur intérieur du canal principal et est préférablement déformable de façon élastique.

13. Le processus selon l'une des revendications 1 à 12, caractérisé en ce que la ou bien chaque extrémité du canal d'alimentation s'étendant dans le canal principal est déplacée dans une zone du canal principal ayant des superficies d'étendues differentes, en particulier d'étendue s'accroissant dans la direction de mouvement de la matière de base.

14. Le processus selon la revendication 13, caractérisé en ce que la ou chaque extrémité du canal d'alimentation s'étendant dans le canal principal est déplacée dans une zone du canal principal ayant une section axiale ou longitudinale conique.

15. Un doseur ayant un canal principal (6) et au moins un canal d'alimentation (1), l'intérieur de l'au moins un canal d'alimentation (1) étant relié avec l'intérieur du canal principal (6), en particulier pour effectuer le processus selon l'une des revendications 1 à 14, caractérisé en ce que l'au moins un canal d'alimentation (1) consiste en deux parties, une partie du canal d'alimentation étant arrangée à l'extérieur du canal principal (6) et étant reliée avec une partie du canal d'alimentation (1) s'étendant vers l'intérieur du canal principal (6), cette dernière partie ayant un orifice de sortie (3) formant un angle avec un plan normal à l'axe longitudinal de cette partie du canal d'alimentation s'étendant vers l'intérieur du canal principal, le canal d'alimentation (1), mais au moins cette partie de celui-ci s'étendant vers l'intérieur du canal principal, étant mobile, en particulier rotative autour de l'axe longitudinal (E) du canal d'alimentation, ce qui rend possible d'ajuster le rapport entre la surface, projetée dans la direction de mouvement de la matière de base, de l'orifice de sortie de cette partie de l'au moins un canal d'alimentation qui est située dans le canal principial et la section de passage du canal principal dans la zone de l'orifice de sortie.

16. Le doseur selon la revendication 15, caractérisé en ce que la partie de l'au moins un canal d'alimentation (1) s'étendant vers l'intérieur du canal principal (6) est formée comme manchon.

17. Le doseur selon la revendication 16, caractérisé en ce que le manchon est mobile dans l'axe (E) du canal d'alimenation (correspondant) (1).

18. Le doseur salon l'une des revendications 15 à 17, caractérisé en ce que le ou bien chaque canal d'alimentation (1) est au moins en partie incliné, préférablement avec un angle (α) d'environ 45° au canal principal (6), qui est préférablement arrangé de façon verticale.

19. Le doseur selon l'une des revendications 15 à 18, caractérisé en ce qu'au moins un récipient (7) déformable, préférablement de façon élastique, qui est pourvu d'au moins un raccord (8) pour l'alimentation ou la dérivation de matière, en particulier matière sous pression, est arrangé dans la zone de la ou de chaque extrémité du canal d'alimentation s'étendant dans le canal principal (6), préférablement en aval de l'orifice/des orifices (3) de sortie, par rapport à la direction de mouvement de la matière de base, à l'intérieur, en particulier au mur intérieur du canal principal (6).

20. Le doseur selon l'une des revendications 15 à 19, caractérisé en ce que le guide (2) est pivotable autour d'un axe (A) au moins essentiellement positionné de façon normale au plan formé par les axes du canal principal (6) et du canal d'alimentation (1).

21. Le doseur selon l'une des revendications 15 à 20, caractérisé en ce que le canal principal (6) présente des superficies d'étendues differentes, en particulier d'étendue s'accroissant dans la direction de mouvement (B') de la matière de base, préférablement ayant une section axiale ou bien longitudinale conique avec des murs s'élargant dans la direction de mouvement (B') de la matière de base et en ce que le ou chaque orifice de sortie (3) peut être déplacé vers l'intérieur de ou bien dans cette zone du canal principal (6).

22. Le doseur selon l'une des revendications 15 à 21, caractérisé en ce que les guides (2) appartenant à plusieurs canaux d'alimentation sont distribués régulièrement à travers la section transversale du canal principal (6).
